# EUROPEAN PATENT APPLICATION

(11) **EP 4 353 786 A1**
(43) Date of publication of application: **17.04.2024**
(21) Application number: 22201359.1
(22) Date of filing: 13.10.2022
(51) Int. Cl.: C09D 7/41, B05D 7/00

(54) **SUSTAINABLY PRODUCIBLE PIGMENTS AND DYES FOR AUTOMOTIVE COATINGS**

(71) Applicant: BASF Coatings GmbH, 48165 Münster (DE)
(72) Inventor: GUTJAHR, Mark, 48165 Münster (DE); VAN DER AUWERA, Astrid, 48165 Münster (DE); HESSELMANN, Marco, 48165 Münster (DE); ZINK, Lena, 48165 Münster (DE); NIEMANN, Juergen, 48165 Münster (DE); ZAMINER, Jan, 48165 Münster (DE)
(74) Representative: Steffan & Kiehne Patentanwälte PartG mbB

(57) **Abstract**

The present invention relates to a coating material composition comprising at least one organic pigment and/or dye as at least one constituent a1), said pigment and/or dye being producible by means of at least one kind of microorganisms such as at least one kind of bacteria, at least one film-forming polymer as at least one constituent a2), and at least one organic solvent and/or water as at least one constituent a3), a use of said organic pigment and/or dye for coloring a coating material composition, a multilayer coating system being present on an optionally precoated substrate and comprising at least two coatings layers L1 and L2, namely a first pigmented coating layer L1 applied over at least a portion of an optionally precoated substrate, and a second coating layer L2 applied over the first pigmented coating layer L1, wherein the first coating layer L1 is formed from the coating material composition mentioned hereinbefore, and to a method for preparing said multilayer coating system.

## Description

The present invention relates to a coating material composition being at least partially obtainable from making use of sustainably producible renewable raw materials, a use of such sustainably producible renewable raw materials for coloring a coating material composition, a multilayer coating system being present on an optionally pre-coated substrate and comprising inter alia a coating layer being formed from said coating material composition, and to a method for preparing said multilayer coating system.

### Background of the invention

In the automotive industry, there are currently many activities in the development of sustainable processes and the use of renewable raw materials. The focus is often on the film-forming binders used for preparing the in particular aqueous coating material compositions, from which the automotive coatings are subsequently produced, e.g., for use in basecoats such as aqueous basecoats. The focus in general is often on a sustainable production of such renewable raw materials, which are not only usable for preparing particularly the aforementioned (aqueous) coating material compositions, but also additionally allow a preparation of coatings, which at the same time also meet the visual and technical requirements of the automotive coating industry, e.g., meet the necessary appearance requirements.

The focus is often on the film-forming binders used for preparing the coatings, but alternatives are also being sought for other constituents present therein. It would be, thus, desirable to be also able to apply sustainable processes and use renewable raw materials for preparing of other constituents usually present in coating material compositions besides film-forming binders such as coloring pigments, in particular for use in basecoats such as aqueous basecoats.

Thus, there is a need to provide sustainably producible renewable raw materials, which can be used as coloring pigments in coating material compositions, in particular aqueous coating material compositions, from which in turn coatings can be prepared, which meet the visual and technical requirements of the automotive coating industry, in particular the necessary appearance requirements and hence allow the preparation of coatings exhibiting an excellent appearance, but wherein the coating material compositions used at the same time allow not only an ecologically advantageous preparation thereof, but also allow their preparation to proceed in an economically advantageous manner, e.g., with reduced or even no purification steps needed at all, in particular as far as the sustainably prepared coloring pigments per se and their implementation into the coating material compositions are concerned.

### Problem

It has been therefore an objective underlying the present invention to provide sustainably producible renewable raw materials, which can be used as coloring pigments in coating material compositions, in particular waterborne coating material compositions, from which in turn coatings can be prepared, which meet the visual and technical requirements of the automotive coating industry, in particular the necessary appearance requirements and hence allow the preparation of coatings exhibiting an excellent appearance, but wherein these coating material compositions, which contain the aforementioned sustainably producible coloring pigments, at the same time allow not only an ecologically advantageous preparation thereof, but also allow their preparation to proceed in an economically advantageous manner, e.g., with reduced or even no purification steps needed at all, in particular as far as the sustainably prepared coloring pigments per se and their implementation into the coating material compositions are concerned.

### Solution

This objective has been solved by the subject-matter of the claims of the present application as well as by the preferred embodiments thereof disclosed in this specification, i.e., by the subject matter described herein.

A first subject-matter of the present invention is a coating material composition comprising
at least one organic pigment and/or dye as at least one constituent a1), preferably at least one pigment, more preferably at least one coloring pigment, said pigment and/or dye being producible by means of at least one kind of microorganisms such as bacteria,
at least one film-forming polymer as at least one constituent a2), and
at least one organic solvent and/or water as at least one constituent a3).

A further subject-matter of the present invention is use of the at least one organic pigment and/or dye as defined hereinbefore in connection with the first subject-matter of the present invention for coloring a coating material composition such as a basecoat material composition, preferably for coloring a coating material composition as defined in in connection with the first subject-matter of the present invention.

A further subject-matter of the present invention is a multilayer coating system being present on an optionally pre-coated substrate and comprising at least two coatings layers L1 and L2 being different from one another, namely
a first pigmented coating layer L1 applied over at least a portion of an optionally pre-coated substrate, and
a second coating layer L2 applied over the first pigmented coating layer L1,
wherein the first coating layer L1 is formed from the coating material composition as defined hereinbefore in connection with the first subject-matter of the present invention.

A further subject-matter of the present invention is a method for preparing the multilayer coating system as defined hereinbefore, characterized in that comprises at least steps 1), 2) and 3), namely
1) applying a basecoat material composition to at least a portion of an optionally pre-coated substrate and forming a first coating film on at least a portion of the optionally pre-coated substrate,
2) applying a coating material composition different from the composition applied in step 1) to the first coating film present on the substrate obtained after step 1) and forming a second coating film, which is preferably adjacent to the first coating film, wherein said coating material composition is preferably a clearcoat material composition, and
3) jointly curing at least the first and second coating films applied in steps 1) and 2) to obtain a multilayer coating system comprising at least the first and the second coating layers L1 and L2,
wherein the first coating layer L1 is formed from the coating material composition as defined hereinbefore in connection with the first subject-matter of the present invention.

It has been in particular surprisingly found that organic pigments and/or dyes being producible by means of at least kind of microorganisms, in particular by means of at least one kind of bacteria, and, hence being producible in a sustainably manner from renewable raw materials, can be effectively used for coloring coating material compositions, in particular for coloring aqueous coating material compositions such as basecoat material compositions. Hence, these colored coating material compositions, which contain the aforementioned sustainably producible coloring pigments, allow an ecologically advantageous preparation, since the use of conventionally used pigments and/or dyes not prepared form sustainable raw materials for coloring can be reduced or even be avoided.

Further, it has been surprisingly found that coatings prepared from these coating material compositions containing the aforementioned organic pigments and/or dyes being producible by means of at least kind of microorganisms, in particular by means of at least one kind of bacteria, meet the visual and technical requirements of the automotive coating industry, in particular meet the necessary appearance requirements and allow the preparation of coatings exhibiting an excellent appearance, even in case any microorganisms, in particular bacteria, residues and/or fragments originating from the microorganisms, in particular bacteria, used to prepare the pigments/dyes remain in the coatings produced. This in particular applies to multilayer coating systems being present on an optionally pre-coated substrate, which comprise at least two coatings layers L1 and L2, wherein the first coating layer L1 is formed from an aforementioned coating material composition, and the second coating layer is formed from a clearcoat material composition. Herein, it is preferred to use clearcoat material compositions, which allow conventional baking temperatures such as temperatures of about 140 °C, but it is even more preferred to use clearcoat material compositions, which allow only comparably low baking temperatures such as temperatures below 100 °C or below 90 °C or below or equal to 80 °C.

In addition, it has been surprisingly found that coating material compositions containing the aforementioned organic pigments and/or dyes being producible by means of at least kind of microorganisms, in particular by means of at least one kind of bacteria, can be prepared in an economically advantageous manner, in particular with reduced or even no purification steps needed at all. In this regard it has been in particular found that any microorganisms residues such as bacteria residues and/or fragments originating from the microorganisms, in particular bacteria, used to prepare the pigments/dyes may remain in the coatings produced, and that, despite their presence, still excellent optical properties can be achieved. Hence, no purification of the pigments/dyes is necessary after their preparation from microorganisms such as bacteria and prior to their incorporation into the coating material compositions.

### Detailed description of the invention

The term "comprising" in the sense of the present invention, in connection for example with the coating material composition comprising the at least one organic pigment and/or dye being producible by means at least kind of bacteria, preferably has the meaning of "consisting of". With regard, e.g., to said the coating material composition it is possible - in addition to all mandatory constituents present therein - for one or more of the further optional constituents identified hereinafter to be also included therein. All constituents may in each case be present in their preferred embodiments as identified below.

The proportions and amounts in wt.-% (% by weight) of any of the constituents given hereinafter, which are present in each of the coating material compositions add up to 100 wt.-%, based in each case on the total weight of the respective coating material composition.

### Coating material composition

A first subject-matter of the present invention is a coating material composition comprising
at least one organic pigment and/or dye as at least one constituent a1), preferably at least one pigment, said pigment and/or dye being producible by means of at least one kind of microorganisms such as bacteria,
at least one film-forming polymer as at least one constituent a2), and
at least one organic solvent and/or water as at least one constituent a3).

Preferably, the coating material composition is a solventborne or aqueous (waterborne), preferably aqueous, basecoat material composition, which is preferably suitable for use in automotive applications. The term "basecoat" is known in the art and, for example, defined in Römpp Lexikon, paints and printing inks, Georg Thieme Verlag, 1998, 10th edition, page 57. A basecoat is therefore in particular used in automotive painting and general industrial paint coloring in order to give a coloring and/or an optical effect by using the basecoat as an intermediate coating composition.

The coating material composition is preferably a 1K- (one-component) composition, but may alternatively be a 2K- (two components) composition. Preferably, however, it is a 1K-composition.

The term "solventborne" or "non-aqueous" is understood preferably for the purposes of the present invention to mean that organic solvent(s), as solvent(s) and/or as diluent(s), is/are present as the main constituent of all solvents and/or diluents in the respective coating material composition such as in the aforementioned coating material composition if the respective coating composition is solventborne. Preferably, organic solvent(s) are present in an amount of at least 35 wt.-%, based on the total weight of the coating material composition. A solventborne coating material composition preferably includes an organic solvent(s) fraction of at least 40 wt.-%, more preferably of at least 45 wt.-%, very preferably of at least 50 wt.-%, based in each case on the total weight of the coating material composition. All conventional organic solvents known to those skilled in the art can be used as organic solvents. The term "organic solvent" is known to those skilled in the art, in particular from Council Directive 1999/13 / EC of 11 March 1999. Examples of such organic solvents would include heterocyclic, aliphatic, or aromatic hydrocarbons, mono- or polyhydric alcohols, especially methanol and/or ethanol, ethers, esters, ketones, and amides, such as, for example, N-methylpyrrolidone, N-ethylpyrrolidone, dimethylformamide, toluene, xylene, butanol, ethyl glycol and butyl glycol and also their acetates, butyl diglycol, diethylene glycol dimethyl ether, cyclohexanone, methyl ethyl ketone, methyl isobutyl ketone, acetone, isophorone, or mixtures thereof. A solventborne coating material composition preferably is free or essentially free of water. The term "essentially" in this context preferably means that no water is added on purpose when preparing the coating composition.

The term "waterborne" or "aqueous" is understood preferably for the purposes of the present invention to mean that water is present as the main constituent of all solvents and/or diluents present in an aqueous coating material composition such as in the aforementioned coating material composition. Preferably, water is present in an amount of at least 35 wt.-%, based on the total weight of the coating material material composition. An aqueous coating material composition preferably includes a water fraction of at least 40 wt.-%, more preferably of at least 45 wt.-%, very preferably of at least 50 wt.-%, based in each case on the total weight of the coating material composition. The fraction of organic solvent(s) is preferably < 20 wt.-%, more preferably in a range of from 0 to < 20 wt.-%, very preferably in a range of from 0.5 to 20 wt.-% or to 17.5 wt.-% or to 15 wt.-% or to 10 wt.-%, based in each case on the total weight of the coating material composition.

Preferably, the total solid content of the coating material composition is in the range of from 5 to 65 wt.-%, more preferably of from 10 to 60 wt.-%, even more preferably of from 15 to 50 wt.-%, in particular of from 20 or 25 to 45 wt.-%, in each case based on the total weight of the coating material composition. The method for measuring the solid content (non-volatile content) is described in the 'Methods' section hereinafter.

### Organic pigment and/or dye as constituent a1)

The terms "pigment" and "dye" are known to the skilled person, e.g., from DIN 55943 (date: October 2001). A "pigment" in the sense of the present invention refers preferably to a constituent in powder or flake form which is substantially, preferably entirely, insoluble in the medium surrounding them, such as in the coating material composition, for example. Pigments are preferably colorants and/or substances which can be used as pigment on account of their magnetic, electrical and/or electromagnetic properties. Pigments differ from "fillers" preferably in their refractive index, which for pigments is ≥ 1.7. The term "filler" is known to the skilled person, from DIN 55943 (date: October 2001), for example. Pigments in general can be inorganic or organic. However, if constituent a1) is a pigment, it is an organic pigment, preferably an organic color (coloring) pigment. The term "dye" is known to the skilled person, from DIN 55943 (date: October 2001), for example. A "dye" in the sense of the present invention refers preferably to a colorant, which is substantially, preferably entirely, soluble in the medium surrounding them, such as in the coating material composition, for example. Pigments and dyes both represent colorants.

Preferably, constituent a1) is at least one organic pigment, more preferably at least one organic coloring pigment.

Preferably, the at least one organic pigment and/or dye a1) has been incorporated into the coating material composition in a non-purified form after having been produced by means of at least kind of microorganisms, in particular by means of at least one kind of bacteria. Hence, preferably, the coating material composition comprises, besides the at least one pigment and/or dye a1), the microorganisms such as bacteria used or at least fragments thereof, preferably, however, in minor amounts and, in particular, in lower amounts than the at least one pigment and/or dye a1) as such.

Suitable microorganisms to be used in the sense of this invention are in particular bacteria and/or fungi, most preferably bacteria.

Preferably, the at least one organic pigment and/or dye is present in the coating material composition in an amount in a range of from 0.001 to 5.0 wt.-%, more preferably of from 0.005 to 4.5 wt.-%, even more preferably of from 0.01 to 4.0 wt.-%, still more preferably of from 0.05 to 3.5 wt.-%, yet more preferably of from 0.10 to 3.0 or 2.0 wt.-%, even more preferably of from 0.20 to 1.5 wt.-%, based in each case on the total weight of the coating material composition.

Preferably, the at least one organic pigment and/or dye is selected from the group consisting of aromatic and heteroaromatic pigments and mixtures thereof, for example pigments having at least one bis-indole moiety. An exemplary organic pigment is Violacein (a purple pigment). Violacein can be prepared inter alia by making use of Janthinobacterium such as Janthinobacterium lividum, Chromobacterium such as Chromobacterium violaceum and Chromobacterium sp., Duganella sp., Pseudoalteromonas sp., Collimonas sp., Pseudoalteromonas luteoviolacea, Pseudoalteromonas tunicate, lodobacter, Rugamonas, and Massilia.

Further exemplary pigments, in particular exemplary pigments, which can be produced by means of bacteria, are Prodigiosin (a red pigment), which can be prepared by means of Serratia marcesans and/or Serratia marcescens and/or Alteromonas rubra and/or Streptoverticillium and/or Pseudoalteromonas rubra, Indigoidine (a blue pigment), which can be prepared by means of Corynebacterium insidiosum, Canthaxanthin (an orange/red pigment), which can be prepared by means of Monascus roseus and/or Bradyrhizobium sp. and/or Haloferax alexandrines and/or Lactobacillus pluvialis, Zeaxanthin (a yellow pigment), which can be prepared by means of Staphylococcus aureus and/or Flavobacterium sp., Pyocyanin blue (a green pigment), which can be prepared by means of Pseudomonas aeruginosa, beta-carotene (an orange red pigment), which can be prepared by means of Dunaliella salina and/or Rhodococcus maris, Astaxanthin (a red pigment), which can be prepared by means of Hematococcus pluvialis and/or Agrobacterium aurantiacum and/or Paracoccus carotinifaciens, Riboflavin (a yellow pigment), which can be prepared by means of Asbhya gossypi and/or Bacillus sp. and/or Bacillus subtilis, Lycopene (a red pigment), which can be prepared by means of Blakeslea trispora, Torularhodin (an orange/red pigment), which can be prepared by means of Rhodotorula sp., Anthraquinone (a red pigment), which can be prepared by means of Penicillium oxalicum and/or Micromonospora lupine, and Rubrolone (a red pigment), which can be prepared by means of Streptomyces echinoruber, Carotenoids, which can be prepared by means of Streptomyces sp. and/or Pedobacter and/or Kocuria sp., Melanin (a black pigment), which can be prepared by means of Streptomaces glaucescens, Pyocyanin, which can be prepared by means of Pseudomonas aeruginosa and/or Pseudomonas guinea, Prodigines, which can be prepared by means of Hahella chejuensis, Azaphenanthrene, which can be prepared by means of Bacillus cereus, Flexirubin, which can be prepared by means of Chryseobacterium artocarpi, Granadaene, which can be prepared by means of Streptococcus agalactiae, Heptyl prodigiosin, which can be prepared by means of Proteobacteria, Indigoidine, which can be prepared by means of Corynebacterium insidiosum and/or Erwinia chrysanthemi, Phenazine, which can be prepared by means of Pseudomonas sp., Phycocyanin, which can be prepared by means of Pseudomonas sp., Rubrolone, which can be prepared by means of Streptomyces echinoruber, Staphyloxanthin, which can be prepared by means of Staphylococcus aureus, Tryptanthrin, which can be prepared by means of Cytophaga/Flexibacteria, Undecyl prodigiosin, which can be prepared by means of Streptomyces sp., Xanthomonadin, which can be prepared by means of Xanthomonas oryzae, and Zeaxanthin, which can be prepared by means of Flavobacterium sp. and/or Paracoccus sp.

Exemplary pigments, which can be produced by means of fungi are Anthraquinone (a red pigment), which can be prepared by means of stemphylium lycopersici and/or fusarium oxysporum, and Benzoquinone, which can be prepared by means of Fusarium sp.

Preferably, the at least one organic pigment and/or dye such as Violacein is producible by means of at least kind of bacteria, preferably selected from the group consisting of Janthinobacterium such as Janthinobacterium such as Janthinobacterium lividum, Chromobacterium such as Chromobacterium violaceum and Chromobacterium sp., Duganella sp., Pseudoalteromonas sp., Collimonas sp., Pseudoalteromonas luteoviolacea, Pseudoalteromonas tunicate, lodobacter, Rugamonas, and Massilia, preferably by means of Janthinobacterium such as Janthinobacterium lividum. All these bacteria can be used in particular for preparation of the organic pigment Violacein.

A person skilled in the art is aware of methods for preparation of organic pigments and/or dyes such as Violacein by means of microorganisms, in particular via fermentation technology, e.g., from Park et al., Critical Reviews in Biotechnology, 2021 41 (6): 879-901; Yada et al.; Marine Biotechnology, 2008 10 (2): 128-132; Ambrozic Avgustin et al., Antonie van Leeuwenhoek, 2013 103 (4):763-769; I. Sedlacek et al., Microbiology Spectrum 2021 9 (1), e0045221; I. Sedlacek et al., Microorganisms 2022 10 (4), 704; and I. Sedlacek et al., Microbiology Spectrum 2021 9 (1), e0045221. General preparation methods, in particular fermentation methods, can also be found in C. K. Venil et al., Frontiers in Sustainable Food Systems 2020 4 (100): 1 to 17.

Preferably, the at least one organic pigment and/or dye is obtainable by means of fermentation. Preferably, the at least one organic pigment and/or dye is obtainable by means of an incubator and a nutrient solution comprising at least the at least kind of microorganisms, in particular at least kind of bacteria.

Preferably, at least one organic color pigment is present as the at least one constituent a1). Preferably, the coating material composition does not comprise any inorganic color pigments and/or does not comprise any organic color pigments not being producible by means of at least kind of bacteria. Optionally, the coating material composition may, however, additionally comprise at least one effect pigment such as at least one metal effect pigment and/or mica pigment, and/or may comprise at least one filler.

### Film-forming polymer as at least one constituent a2)

The coating material composition comprises at least one film-forming polymer as at least one constituent a2).

Constituent a2) is used as binder. For the purposes of the present invention, the term "binder" is understood in accordance with DIN EN ISO 4618 (German version, date: March 2007) to be the non-volatile constituent of a coating composition, which is responsible for the film formation. The term includes crosslinkers and additives if these represent non-volatile constituents. Pigments and/or fillers contained therein are thus not subsumed under the term "binder". Preferably, the at least one polymer a2) is the main binder of the coating material composition. As the main binder in the present invention, a binder component is preferably referred to, when there is no other binder component in the coating material composition, which is present in a higher proportion based on the total weight of the coating material composition.

The term "polymer" is known to the person skilled in the art and, for the purposes of the present invention, encompasses polyadducts and polymerizates as well as polycondensates. The term "polymer" includes both homopolymers and copolymers.

The at least one polymer used as constituent a2) may be self-crosslinking or non-self-crosslinking. Suitable polymers which can be used are, for example, known from EP 0 228 003 A1, DE 44 38 504 A1, EP 0 593 454 B1, DE 199 48 004 A1, EP 0 787 159 B1, DE 40 09 858 A1, DE 44 37 535 A1, WO 92/15405 A1 and WO 2005/021168 A1.

The at least one polymer used as constituent a2) is preferably selected from the group consisting of polyurethanes, polyureas, polyesters, polyamides, polyethers, poly(meth)acrylates and/or copolymers of the structural units of said polymers such as (meth)acrylic copolymers and/or polyurethane-poly(meth)acrylates and/or polyurethane polyureas. The at least one polymer used as constituent a2) is particularly preferably selected from the group consisting of polyurethanes, polyesters, poly(meth)acrylates and/or copolymers of the structural units of said polymers. The term "(meth) acryl" or "(meth) acrylate" in the context of the present invention in each case comprises the meanings "methacrylic" and/or "acrylic" or "methacrylate" and/or "acrylate".

Preferred polyurethanes are described, for example, in German patent application DE 199 48 004 A1, page 4, line 19 to page 11, line 29 (polyurethane prepolymer B1), in European patent application EP 0 228 003 A1, page 3, line 24 to page 5, Line 40, European Patent Application EP 0 634 431 A1, page 3, line 38 to page 8, line 9, and international patent application WO 92/15405, page 2, line 35 to page 10, line 32. Preferred polyethers are, e.g., described in WO 2017/097642 A1 and WO 2017/121683 A1. Preferred polyesters are described, for example, in DE 4009858 A1 in column 6, line 53 to column 7, line 61 and column 10, line 24 to column 13, line 3 or WO 2014/033135 A2, page 2, line 24 to page 7, line 10 and page 28, line 13 to page 29, line 13 described. Likewise preferred polyesters are polyesters having a dendritic structure or star-shaped structure, as described, for example, in WO 2008/148555 A1. Preferred polyurethane-poly(meth)acrylate copolymers (e.g., (meth)acrylated polyurethanes)) and their preparation are described, for example, in WO 91/15528 A1, page 3, line 21 to page 20, line 33 and in DE 4437535 A1, page 2, line 27 to page 6, line 22 described. Preferred (meth)acrylic copolymers are OH-functional. Hydroxyl-containing monomers include hydroxy alkyl esters of acrylic or methacrylic acid, which can be used for preparing the copolymer. Non-limiting examples of hydroxyl-functional monomers include hydroxyethyl(meth)acrylate, hydroxypropyl(meth)acrylates, hydroxybutyl-(meth)acrylates, hydroxyhexyl(meth)-acrylates, propylene glycol mono(meth)acrylate, 2,3-dihydroxypropyl(meth)acrylate, pentaerythritol mono(meth)acrylate, polypropylene glycol mono(meth)acrylates, polyethylene glycol mono(meth)acrylates, reaction products of these with epsilon-caprolactone, and other hydroxyalkyl-(meth)acrylates having branched or linear alkyl groups of up to about 10 carbons, and mixtures of these. Hydroxyl groups on a vinyl polymer such as an (meth)acrylic polymer can be generated by other means, such as, for example, the ring opening of a glycidyl group, for example from copolymerized glycidyl methacrylate, by an organic acid or an amine. Hydroxyl functionality may also be introduced through thio-alcohol compounds, including, without limitation, 3-mercapto-1-propanol, 3-mercapto-2-butanol, 11-mercapto-1-undecanol, 1-mercapto-2-propanol, 2-mercaptoethanol, 6-mercapto-1-hexanol, 2-mercaptobenzyl alcohol, 3-mercapto-1,2-proanediol, 4-mercapto-1-butanol, and combinations of these. Any of these methods may be used to prepare a useful hydroxyl-functional (meth)acrylic polymer. Examples of suitable comonomers that may be used include, without limitation, α,β-ethylenically unsaturated monocarboxylic acids containing 3 to 5 carbon atoms such as acrylic, methacrylic, and crotonic acids and the alkyl and cycloalkyl esters, nitriles, and amides of acrylic acid, methacrylic acid, and crotonic acid; α,β-ethylenically unsaturated dicarboxylic acids containing 4 to 6 carbon atoms and the anhydrides, monoesters, and diesters of those acids; vinyl esters, vinyl ethers, vinyl ketones, and aromatic or heterocyclic aliphatic vinyl compounds. Representative examples of suitable esters of acrylic, methacrylic, and crotonic acids include, without limitation, those esters from reaction with saturated aliphatic alcohols containing 1 to 20 carbon atoms, such as methyl, ethyl, propyl, isopropyl, n-butyl, isobutyl, tert-butyl, hexyl, 2-ethylhexyl, dodecyl, 3,3,5-trimethylhexyl, stearyl, lauryl, cyclohexyl, alkyl-substituted cyclohexyl, alkanol-substituted cyclohexyl, such as 2-tert-butyl and 4-tert-butyl cyclohexyl, 4-cyclohexyl-1-butyl, 2-tert-butyl cyclohexyl, 4-tert-butyl cyclohexyl, 3,3,5,5,-tetramethyl cyclohexyl, tetrahydrofurfuryl, and isobornyl acrylates, methacrylates, and crotonates; unsaturated dialkanoic acids and anhydrides such as fumaric, maleic, itaconic acids and anhydrides and their mono- and diesters with alcohols such as methanol, ethanol, propanol, isopropanol, butanol, isobutanol, and tert-butanol, like maleic anhydride, maleic acid dimethyl ester and maleic acid monohexyl ester; vinyl acetate, vinyl propionate, vinyl ethyl ether, and vinyl ethyl ketone; styrene, a-methyl styrene, vinyl toluene, 2-vinyl pyrrolidone, and p-tert-butylstyrene. The (meth)acrylic copolymer may be prepared using conventional techniques, such as by heating the monomers in the presence of a polymerization initiating agent and optionally a chain transfer agent. Suitable poly(meth)acrylates are also those which can be prepared by multistage free-radical emulsion polymerization of olefinically unsaturated monomers in water and/or organic solvents. Examples of seed-core-shell polymers (SCS polymers) obtained in this manner are disclosed in WO 2016/116299 A1. Preferred polyurethane-polyurea copolymers are polyurethane-polyurea particles, preferably those having a Z-average particle size of 40 to 2000 nm, the polyurethane-polyurea particles, each in reacted form, containing at least one isocyanate group-containing polyurethane prepolymer containing anionic and/or groups which can be converted into anionic groups and at least one polyamine containing two primary amino groups and one or two secondary amino groups. Preferably, such copolymers are used in the form of an aqueous dispersion. Such polymers can in principle be prepared by conventional polyaddition of, for example, polyisocyanates with polyols and polyamines.

The polymer used as constituent a2) preferably has reactive functional groups which enable a crosslinking reaction. Any common crosslinkable reactive functional group known to those skilled in the art can be present. Preferably, the polymer used as constituent a2) has at least one kind of functional reactive groups selected from the group consisting of primary amino groups, secondary amino groups, hydroxyl groups, thiol groups, carboxyl groups and carbamate groups. Preferably, the polymer used as constituent a2) has functional hydroxyl groups and/or carbamate groups.

Preferably, the polymer used as constituent a2) is hydroxyl-functional and more preferably has an OH number in the range of 15 to 400 mg KOH / g, more preferably from 20 to 250 mg KOH/g.

The polymer used as constituent a1) is particularly preferably a hydroxyl-functional polyurethane-poly(meth)acrylate copolymer and/or a hydroxyl-functional polyester and/or a hydroxyl-functional polyurethane and/or a hydroxyl-functional (meth)acrylic copolymer-

In addition, the coating material composition may contain at least one typical crosslinking agent known per se. Crosslinking agents are to be included among the film-forming non-volatile components of a coating composition, and therefore fall within the general definition of the "binder". Crosslinking agents are thus to be subsumed under the constituent a2).

All conventional crosslinking agents can be used. This includes melamine resins, preferably melamine aldehyde resins, more preferably melamine formaldehyde resins, blocked polyisocyanates, polyisocyanates having free (unblocked) isocyanate groups, crosslinking agents having amino groups such as secondary and/or primary amino groups, and crosslinking agents having epoxide groups and/or hydrazide groups, as well as crosslinking agents having carbodiimide groups, as long as the functional groups of the particular crosslinking agent are suitable to be reacted with the crosslinkable functional groups of the film-forming polymers used as binders in a crosslinking reaction. For example, a crosslinking agent having blocked or free isocyanate groups can be reacted with a film-forming polymer having crosslinkable OH-groups and/or amino groups at elevated temperatures in case of 1K formulations and at ambient temperature in case of 2K formulations.

If a crosslinking agent is present, it is preferably at least one aminoplast resin and/or at least one blocked or free polyisocyanate, preferably an aminoplast resin. Among the aminoplast resins, melamine resins such as melamine formaldehyde resins are particularly preferred. Preferably, the melamine aldehyde resins, preferably the melamine formaldehyde resins, in each case bear at least one of imino groups, alkykol groups and etherified alkylol groups as functional groups, which are reactive towards the functional groups of polymer P1. Examples of alkylol groups are methylol groups.

### Organic solvent(s) and/or water as at least one constituent a3)

The coating material composition comprises at least one organic solvent and/or water as least one constituent a3), preferably contains at least water. Suitable organic solvents have already been mentioned hereinbefore.

### Optional further constituent(s)

The coating material composition may optionally contain - besides constituents a1) to a3) - one or more commonly used additives depending on the desired application. For example, the coating material composition may comprise independently of one another at least one additive selected from the group consisting of reactive diluents, catalysts, light stabilizers, antioxidants, deaerators, emulsifiers, slip additives, polymerization inhibitors, plasticizers, initiators for free-radical polymerizations, adhesion promoters, flow control agents, film-forming auxiliaries, sag control agents (SCAs), flame retardants, corrosion inhibitors, siccatives, thickeners, biocides and/or matting agents. They can be used in known and customary proportions. Preferably, their content, based on the total weight of the coating material composition is 0.01 to 20.0 wt.-%, more preferably 0.05 to 15.0 wt.-%, particularly preferably 0.1 to 10.0 % by weight, most preferably from 0.1 to 7.5% by weight, especially from 0.1 to 5.0% by weight and most preferably from 0.1 to 2.5% by weight.

### Use of at least one organic pigment and/or dye being producible by means of bacteria for coloring of coating material compositions

A further subject-matter of the present invention is use of the at least one organic pigment and/or dye as defined hereinbefore for coloring a coating material composition, preferably for coloring a coating material composition, preferably a basecoat material composition, as defined hereinbefore, in particular for automotive coating applications.

All preferred embodiments described hereinabove in connection with the coating material composition as such are also preferred embodiments with regard to the aforementioned use.

### Multilayer coating system

A further subject-matter of the present invention is a multilayer coating system being present on an optionally pre-coated substrate and comprising at least two coatings layers L1 and L2 being different from one another, namely
a first pigmented coating layer L1 applied over at least a portion of an optionally pre-coated substrate, and
a second coating layer L2 applied over the first pigmented coating layer L1,
wherein the first coating layer L1 is formed from the coating material composition as defined hereinbefore, which contains at least constituents a1) to a3).

All preferred embodiments described hereinabove in connection with the coating material composition as such and the aforementioned use are also preferred embodiments with regard to the multilayer coating system as such.

The multilayer coating system may comprise one or more further coating layers different from L1 and L2, which may be, e.g., positioned underneath L1, in particular when an already pre-coated substrate is used, which will be outlined in more detail hereinafter, and/or which may be present between layers L1 and L2. Preferably, however, the first and the second coating layers L1 and L2 are positioned adjacently to each other.

Preferably, the multilayer coating system is obtainable by a method, according to which at least a first coating film in turn obtainable from the coating material composition used for preparing the first coating layer L1 and a second coating film in turn obtainable from the coating material composition used for preparing the second coating layer L2 are jointly cured to obtain at least the first and second coating layers L1 and L2 of the multilayer coating system, wherein curing preferably takes place at room temperature or at an elevated temperature, wherein the elevated temperature preferably does not exceed 140 °C, more preferably 130 °C, still more preferably 120 °C, yet more preferably 110 °C, even more preferably 100 °C, yet more preferably 90 °C, still more preferably 80 °C.

Curing is preferably selected from chemical curing such as chemical crosslinking, radiation curing, and/or physically drying (non-chemical curing), in each case at room temperature or at an elevated temperature, more preferably is selected from chemical curing such as chemical crosslinking and/or physically drying (non-chemical curing), even more preferably is selected from chemical curing such as chemical crosslinking, in each case at room temperature or at an elevated temperature, in each case preferably wherein the maximum curing temperature applied for curing is 140 °C, more preferably 130 °C, still more preferably 120 °C, yet more preferably 110 °C, even more preferably 100 °C, yet more preferably 90 °C, still more preferably 80 °C.

### Optionally pre-coated substrate

The multilayer coating system is particularly suitable as a coating of automotive vehicle bodies or parts thereof including respective metallic substrates, but also plastic substrates such as polymeric substrates. Consequently, the preferred substrates are automotive vehicle bodies or parts thereof.

Suitability as metallic substrates used in accordance with the invention are all substrates used customarily and known to the skilled person. The substrates used in accordance with the invention are preferably metallic substrates, more preferably selected from the group consisting of steel, preferably steel selected from the group consisting of bare steel, cold rolled steel (CRS), hot rolled steel, galvanized steel such as hot dip galvanized steel (HDG), alloy galvanized steel (such as, for example, Galvalume, Galvannealed or Galfan) and aluminized steel, aluminum and magnesium, and also Zn/Mg alloys and Zn/Ni alloys. Particularly suitable substrates are parts of vehicle bodies or complete bodies of automobiles for production.

Preferably, thermoplastic polymers are used as plastic substrates. Suitable polymers are poly(meth)acrylates including polymethyl(meth)acrylates, polybutyl (meth)acrylates, polyethylene terephthalates, polybutylene terephthalates, polyvinylidene fluorides, polyvinyl chlorides, polyesters, including polycarbonates and polyvinyl acetate, polyamides, polyolefins such as polyethylene, polypropylene, polystyrene, and also polybutadiene, polyacrylonitrile, polyacetal, polyacrylonitrile-ethylene-propylene-diene-styrene copolymers (A-EPDM), ASA (acrylonitrile-styrene-acrylic ester copolymers) and ABS (acrylonitrile-butadiene-styrene copolymers), polyetherimides, phenolic resins, urea resins, melamine resins, alkyd resins, epoxy resins, polyurethanes, including TPU, polyetherketones, polyphenylene sulfides, polyethers, polyvinyl alcohols, and mixtures thereof. Polycarbonates and poly(meth)acrylates are especially preferred.

The substrate used in accordance with the invention is preferably a metallic substrate preferably chemically pretreated with at least one metal phosphate such as zinc phosphate and/or chemically pretreated with at least one an oxalate. A pretreatment of this kind by means of phosphating, which takes place normally after the substrate has been cleaned and before the substrate is electrodeposition-coated, is in particular a chemical pretreatment step that is customary in the automobile industry.

As outlined above the substrate used may be a pre-coated substrate, i.e., a substrate already bearing at least one coating layer. The substrate can be, e.g., pre-coated with a cured electrodeposition coating layer. The substrate can, e.g., be provided additionally or alternatively with at least one cured primer coating layer as at least one alternative or additional pre-coat. The term "primer" is known to a person skilled in the art. A primer typically is applied after the substrate has been provided with a cured electrodeposition coating layer. In case a cured primer coating layer is present, the cured electrodeposition coating film is preferably present underneath and preferably adjacent to the cured primer coating film. Further, present on top of the primer layer or on top of the electrodeposition coating layer may be a preferably pigmented basecoat film (uncured) or layer (cured) as well, wherein said basecoat film or layer is preferably not prepared by making use of the coating material composition used to form the first coating layer L1. In this case said basecoat layer would be present underneath the first coating layer L1. The term "basecoat" is known in the art and, for example, defined in Römpp Lexikon, paints and printing inks, Georg Thieme Verlag, 1998, 10th edition, page 57. A basecoat is therefore in particular used in automotive painting and general industrial paint coloring in order to give a coloring and/or an optical effect by using the basecoat as an intermediate coating composition.

### First coating layer L1

The first pigmented coating layer L1 is applied over at least a portion of an optionally pre-coated substrate and is formed from the inventive coating material composition as defined hereinbefore. As outlined hereinbefore, the pre-coat may be an electrocoat and/or primer. Further, as outlined hereinbefore, a preferably pigmented basecoat may also be part of said pre-coat. In this case, the first pigmented coating layer L1 is preferably applied over at least a portion of the basecoat layer already present on the substrate. Alternatively, in particular, when no basecoat is present, the first pigmented coating layer L1 is preferably applied over at least a portion of the primer layer already present on the substrate.

### Second coating layer L2

The second coating layer L2 is applied over the first pigmented coating layer L1. As outlined hereinbefore, the second coating layer L2 is preferably applied directly over the first pigmented coating layer L1, in which case it is in contact and adjacent to coating layer L1. It is, however, also possible that a further coating layer such as a coating layer L1a is present between coating layers L1 and L2, for example, by additionally applying a preferably pigmented basecoat material composition for formation of said layer L1a, which different from the inventive coating material composition comprising the at least constituents a1, a2 and a3, and which is also different from the coating material composition used in step 2).

Preferably, the second coating layer L2 is formed from a coating composition, which is a clearcoat composition, more preferably a solventborne clearcoat composition, wherein the second coating layer L2 preferably is the outermost coating layer of the multilayer coating system.

The clearcoat composition may be an aqueous coating composition. It may alternatively be a solventborne clearcoat composition. Preferably, it is a solventborne clearcoat composition. The clearcoat composition can be 1K- (one-component) or 2K- (two components) composition.

Preferably, the total solid content of the clearcoat composition is in a range of from 10 to 65 wt.-%, more preferably of from 15 to 60 wt.-%, even more preferably of from 20 to 50 wt.-%, in particular of from 25 to 45 wt.-%, in each case based on the total weight of the clearcoat composition.

The clearcoat composition preferably comprises at least one binder, more preferably at least one polymer c1) as binder. The same type of binders including crosslinkers described above in connection with constituent a1) can also be used as constituent c1).

Preferably, the clearcoat composition comprises at least one polymer c1) having on average two or more OH-groups and/or amino groups and/or carbamate groups, more preferably OH-groups and/or carbamate groups.

If the clearcoat composition is formulated as a 2K coating composition, it preferably contains as at least one further polymer c1) being present therein at least one polyisocyanate having free NCO-groups as crosslinker. If the clearcoat composition is formulated as a 1K coating composition it preferably contains as at least one further polymer c1) being present therein at least one polyisocyanate having blocked NCO-groups and/or at least one melamine formaldehyde resin as crosslinker.

Suitable constituents c1) for use as crosslinkers are organic constituents bearing on average two or more NCO-groups. The at least one organic constituent used as crosslinker preferably has a cycloaliphatic structure and/or a parent structure that is derived from a cycloaliphatic polyisocyanate by trimerization, dimerization, urethane formation, biuret formation, uretdione formation and/or allophanate formation. Alternatively or additionally, the at least one organic constituent used as crosslinker preferably has an acyclic aliphatic structure and/or a parent structure that is derived from an acyclic aliphatic polyisocyanate by trimerization, dimerization, urethane formation, biuret formation, uretdione formation and/or allophanate formation. The acyclic aliphatic polyisocyanates - optionally serving as parent structures - are preferably substituted or unsubstituted aliphatic polyisocyanates that are known per se. Examples are tetramethylene 1,4-diisocyanate, hexamethylene 1,6-diisocyanate, 2,2,4-trimethylhexane 1,6-diisocyanate, ethylene diisocyanate, dodecane 1,12-diisocyanate, and mixtures of the aforementioned polyisocyanates. The cycloaliphatic polyisocyanates - optionally serving as parent structures - are preferably substituted or unsubstituted cycloaliphatic polyisocyanates which are known per se. Examples of preferred polyisocyanates are isophorone diisocyanate, cyclobutane 1,3-diisocyanate, cyclohexane 1,3-diisocyanate, cyclohexane 1,4-diisocyanate, methylcyclohexyl diisocyanates, hexahydrotoluene 2,4-diisocyanate, hexahydrotoluene 2,6-diisocyanate, hexahydrophenylene 1,3-diisocyanate, hexahydrophenylene 1,4-diisocyanate, perhydrodiphenylmethane 2,4'-diisocyanate, 4,4'-methylendicyclohexyl diisocyanate (e.g. Desmodur ^{®} W from Bayer AG) and mixtures of the aforementioned polyisocyanates. The organic constituents bearing on average two or more NCO-groups mentioned above can also be partially be silanized. Such silanized crosslinking agents are e.g., disclosed in WO 2010/063332 A1, WO 2010/139375 A1 and WO 2009/077181 A1.

Suitable constituents c1) for use as crosslinkers in particular in case the clearcoat compositions are formulated as 1K coating compositions are melamine formaldehyde resins. The same melamine formaldehyde resins can be used which have already been discussed hereinbefore in connection with constituent a1).

The clearcoat composition may be non-pigmented and preferably is non-pigmented. The clearcoat composition may alternatively contain coloring and/or effect pigments, preferably coloring pigments, in such amounts that do not interfere with the desired transparency of the clearcoat once cured. For examples, the clearcoat composition may contain up to 7.5 wt.-%, preferably up to 5.0 wt.-%, more preferably up to 2.5 wt.-%, still more preferably up to 1.5 wt.-% of at least one coloring pigment, in each case based on the total solid content of the clearcoat composition. The same applies to optionally present fillers within the clearcoat composition. Preferably, however, the clearcoat composition is free of pigments and/or fillers.

### Method for preparation of the multilayer coating system

A further subject-matter of the present invention is a method for preparing the multilayer coating system as defined hereinbefore, characterized in that comprises at least steps 1), 2) and 3), namely
1) applying a basecoat material composition to at least a portion of an optionally pre-coated substrate and forming a first coating film on at least a portion of the optionally pre-coated substrate,
2) applying a coating material composition different from the composition applied in step 1) to the first coating film present on the substrate obtained after step 1) and forming a second coating film, which is preferably adjacent to the first coating film, wherein said coating material composition is preferably a clearcoat material composition, and
3) jointly curing at least the first and second coating films applied in steps 1) and 2) to obtain a multilayer coating system comprising at least the first and the second coating layers L1 and L2,
wherein the first coating layer L1 is formed from the coating material composition as defined hereinbefore in connection with the first subject-matter of the present invention. The first coating layer L1 is, hence, formed from making use of the basecoat material composition used in step 1).

All preferred embodiments described hereinabove in connection with the coating material composition as such and the aforementioned use as well as the multilayer coating system as such are also preferred embodiments with regard to the method of preparing the multilayer coating system.

The inventive method is both suitable for automotive OEM and refinish applications, in particular for automotive OEM applications.

The method may comprise further steps besides steps 1), 2) and 3).

Preferably, each of steps 1) and 2) is performed via spray application.

The first and second coating films are at this stage - after having performed the respective step(s) - preferably each uncured coating films. Thus, at least the coating composition applied in step 2) is preferably applied wet-on-wet onto the first coating film obtained after having performed step 1). When the resulting first and second coating films are jointly cured in step 3), the inventive method is a 2C1B-method.

### Step 1)

In step 1) a basecoat material composition is applied to at least a portion of an optionally pre-coated substrate and a first coating film is formed on at least a portion of the optionally pre-coated substrate. The first layer L1 is later subsequently formed after curing step 3) from said first coating film.

### Optional step (1a)

Preferably, the inventive method further comprises a step 1a), which is carried out after step 1) and before step 2). In said step 1a) the first coating film obtained after step 1) is flashed-off before applying the clearcoat composition in step 2), preferably for a period of 1 to 20 minutes, more preferably for a period of 2 to 15 minutes, in particular for a period of 5 to 10 minutes. Preferably, step 1a) is performed at a temperature not exceeding 40°C, more preferably at a temperature in the range of from 18 to 30°C. The term "flashing off" in the sense of the present invention preferably means a drying, wherein at least some and/or some amounts of the solvents (water and/or organic solvent(s)) are evaporated from the coating film, before the next coating composition is applied and/or a curing is carried out. No curing is performed by the flashing-off.

### Optional step 1b)

Optionally, the inventive method further comprises a step 1b), which is carried out after step 1) or 1a) and before step 2). In said optional step 1b) a coating material composition different from the coating material composition applied in step 1) and different from the composition applied in step 2) is applied to the first coating film present on the substrate obtained after step 1) and a further coating film is formed, which is preferably adjacent to the first coating film, wherein said coating material composition is preferably a basecoat material composition. Hence, in case optional step 1b) is carried out in addition to step 1), preferably two basecoat films are applied, which are different from one another.

### Step 2)

In step 2) a coating material composition different from the composition applied in step 1) is applied to the first coating film present on the substrate obtained after step 1) and a second coating film is formed, which is preferably adjacent to the first coating film, wherein said coating material composition is preferably a clearcoat material composition. The second layer L2 is later subsequently formed after curing step 3) from said second coating film.

As outlined above, the second coating film is preferably adjacent to the first coating film. However, it is also possible, e.g., in case aforementioned optional step 1b) has been carried out, that the second coating is not adjacent to the first coating film, but instead adjacent to the further coating film applied in optional step 1b).

Preferably, the second coating film obtained after step 2) is the outermost film of the formed multilayer coating system.

### Optional step 2a)

Preferably, the inventive method further comprises a step 2), which is carried out after step 2) and before step 3). In said step 2) the second coating film obtained after step 2) is flashed-off before performing curing step 3), preferably for a period of 1 to 20 minutes, more preferably for a period of 2 to 15 minutes, in particular for a period of 5 to 10 minutes. Preferably, step 2a) is performed at a temperature not exceeding 40°C, more preferably at a temperature in the range of from 18 to 30°C.

### Step 3)

In step 3) at least the first and second coating films applied in steps 1) and 2) are jointly, i.e., simultaneously, cured to obtain a multilayer coating system comprising at least the first and the second coating layers L1 and L2. Each resulting cured coating film represents a coating layer. In case optional step 1b) has also been carried out, this further coating film present is also simultaneously cured when the first and second coating films are cured to an additionally present layer L1a, which is present between layers L1 and L2.

Preferably, step 3) is performed at a temperature less than 150°C, preferably less than 140°C, more preferably less than 130 °C, in particular at a temperature in the range of from 60 to <120°C or of from 60 to <100°C or of from 60 to <90°C or of from 60 to ≤80°C, for a period of 5 to 45 minutes, preferably for a period of 20 to 45 minutes, in particular for a period of 25 to 35 minutes. Preferably, however, the maximum curing temperature applied in step 3) does not exceed 140 °C, more preferably 130 °C, still more preferably 120 °C, yet more preferably 110 °C, even more preferably 100 °C, yet more preferably 90 °C, still more preferably 80 °C.

Preferably, curing according to step 3) is selected from chemical curing such as chemical crosslinking, radiation curing, and/or physically drying (non-chemical curing), in each case at room temperature or at an elevated temperature, more preferably is selected from chemical curing, such as chemical crosslinking, and/or physically drying (non-chemical curing), in each case at room temperature or at an elevated temperature, in each case preferably wherein the maximum curing temperature applied for curing is 140 °C, more preferably 130 °C, still more preferably 120 °C, yet more preferably 110 °C, even more preferably 100 °C, yet more preferably 90 °C, still more preferably 80 °C.

### METHODS

### 1. Determining the non-volatile fraction

The amount of solid content (non-volatile matter, solid fraction) including the total solid content is determined via DIN EN ISO 3251:2019-09 at 110°C for 60 min.

### EXAMPLES

The following examples further illustrate the invention but are not to be construed as limiting its scope.

### 1. Preparation of pigments and dyes

An organic bis-indole pigment, namely violacein, has been produced in bacteria, namely in Janthinobacterium lividum, in an incubator by making use of a nutrient solution.

### 2. Preparation of aqueous coating material compositions suitable for use as aqueous basecoats

A water/ethanol solution of the bacterial cultures prepared as described hereinbefore in item **1.** and containing both bacteria and residues/fragments thereof and violacein as color pigment was evaporated over several days at about 30 °C until only a pigment-containing solid residue remained (0.2 wt.-% of the former total solution).

The pigment solid residue was then added in an amount of 0.4 or 0.8 wt.-% to an aqueous basecoat material composition **BC0**, based on the total weight of the composition. The resulting mixture was then dispersed with aid of an Ultra-Turrax to yield a blue colored aqueous basecoat material composition **BC1** (comprising 0.4 wt.- % pigment-containing solid residue) and a blue colored aqueous basecoat material composition **BC2** (comprising 0.8 wt.-% pigment-containing solid residue). The composition of aqueous basecoat material composition **BC0** is disclosed in Table 1 depicted hereinafter and has a total solid content of about 21 wt.-%.

**Table 1:**

| *Constituent* | *Amount [wt.-%]* |
|---|---|
| Deionized water | 62.50 |
| Polyurethane resin | 6.50 |
| Polyester resin | 2.40 |
| (Meth)acrylic resin | 1.80 |
| Melamine-formaldehyde resin | 3.80 |
| Mixture of organic solvents | 16.50 |
| Polypropylene glycol | 1.00 |
| Inorganic compounds | 0.80 |
| Mix of conventional additives in organic solvents | 4.70 |

The inorganic compounds used are not pigments, but rather additives for rheology control.

### 3. Preparation of coated substrates

Aqueous basecoat material compositions **BC1** or **BC2** were applied by means of a doctor blade or via pneumatic spray application onto the surface of a metallic substrate, said surface already bearing a (first) commercially available white or silver colored basecoat coating. Then, a commercially available clearcoat composition (one of commercially available products 923-115 Glasurit^{®} and 932-55 Glasurit^{®}) was applied wet-on-wet on top of a coating film obtained from applying **BC1.** Flash-off was performed for 10 minutes at 60 °C and then, both coatings films applied (**BC1** or **BC2** and the resulting clearcoat film) were simultaneously baked at 80 °C oven temperature.

### 4. Properties of the coated substrates

After storage of the coated substrates in daylight, no fading color effect was observed. The coated substrates not only showed excellent color and an excellent UV stability, but also a good appearance.

## Claims

1. A coating material composition comprising
at least one organic pigment and/or dye as at least one constituent a1), said pigment and/or dye being producible by means of at least one kind of microorganisms,
at least one film-forming polymer as at least one constituent a2), and
at least one organic solvent and/or water as at least one constituent a3).

2. The coating material composition according to claim 1, **characterized in that** the at least one organic pigment and/or dye has been incorporated into the coating material composition in a non-purified form after having been produced by means of the at least one kind of microorganisms, preferably after having been produced by means of at least one kind of bacteria.

3. The coating material composition according to claim 1 or 2, **characterized in that** the at least one organic pigment and/or dye is present therein in an amount in a range of from 0.001 to 5.0 wt.-%, preferably of from 0.005 to 4.5 wt.-%, more preferably of from 0.01 to 4.0 wt.-%, still more preferably of from 0.05 to 3.5 wt.-%, yet more preferably of from 0.10 to 3.0 or 2.0 wt.-%, even more preferably of from 0.20 to 1.5 wt.-%, based in each case on the total weight of the coating material composition.

4. The coating material composition according to one or more of the preceding claims, **characterized in that** the at least one organic pigment and/or dye is selected from the group consisting of aromatic and heteroaromatic coloring pigments and mixtures thereof, in particular pigments having at least one bis-indole moiety such as Violacein.

5. The coating material composition according to one or more of the preceding claims, **characterized in that** the at least one organic pigment and/or dye is producible by means of at least one kind of bacteria and/or fungi, preferably by means of at least one kind of bacteria.

6. The coating material composition according to one or more of the preceding claims, **characterized in that** the at least one organic pigment and/or dye is producible by means of at least one of Janthinobacterium such as Janthinobacterium such as Janthinobacterium lividum, Chromobacterium such as Chromobacterium violaceum and Chromobacterium sp., Duganella sp., Pseudoalteromonas sp., Collimonas sp., Pseudoalteromonas luteoviolacea, Pseudoalteromonas tunicate, lodobacter, Rugamonas, and Massilia, preferably by means of Janthinobacterium such as Janthinobacterium lividum.

7. The coating material composition according to one or more of the preceding claims, **characterized in that** the at least one organic pigment and/or dye is obtainable by means of an incubator and a nutrient solution comprising at least the at least one kind of microorganisms, in particular at least one kind of bacteria, preferably via fermentation.

8. The coating material composition according to one or more of the preceding claims, **characterized in that** at least one organic color pigment is present as the at least one constituent a1), wherein the coating material composition preferably does not comprise any inorganic color pigments and/or preferably does not comprise any organic color pigments not being producible by means of at least one kind of microorganisms.

9. The coating material composition according to one or more of the preceding claims, **characterized in that** it is a solventborne or aqueous, preferably aqueous, basecoat material composition, suitable for use in automotive applications.

10. A use of the at least one organic pigment and/or dye as defined in one or more of claims 1 to 9 for coloring a coating material composition, preferably for coloring a coating material composition as defined in one or more of claims 1 to 9.

11. A multilayer coating system being present on an optionally pre-coated substrate and comprising at least two coatings layers L1 and L2 being different from one another, namely
a first pigmented coating layer L1 applied over at least a portion of an optionally pre-coated substrate, and
a second coating layer L2 applied over the first pigmented coating layer L1,
wherein the first coating layer L1 is formed from the coating material composition according to one or more of claims 1 to 9.

12. The multilayer coating system according to claim 11, **characterized in that** the second coating layer L2 is formed from a coating composition, which is a clearcoat composition, preferably a solventborne clearcoat composition, wherein the second coating layer L2 preferably is the outermost coating layer of the multilayer coating system.

13. The multilayer coating system according to claim 11 or 12, **characterized in that** the first and the second coating layers L1 and L2 are positioned adjacently to each other.

14. The multilayer coating system according to one or more of claims 11 to 13, **characterized in that** it is obtainable by a method, according to which at least a first coating film being in turn obtainable from the coating material composition used for preparing the first coating layer L1 and a second coating film being in turn obtainable from the coating material composition used for preparing the second coating layer L2 are jointly cured to obtain at least the first and second coating layers L1 and L2 of the multilayer coating system, wherein curing preferably takes place at room temperature or at an elevated temperature, wherein the elevated temperature preferably does not exceed 140 °C, more preferably 130 °C, still more preferably 120 °C, yet more preferably 110 °C, even more preferably 100 °C, yet more preferably 90 °C, still more preferably 80 °C.

15. A method for preparing the multilayer coating system according to one or more of claims 11 to 14, **characterized in that** comprises at least steps 1), 2) and 3), namely
1) applying a basecoat material composition to at least a portion of an optionally pre-coated substrate and forming a first coating film on at least a portion of the optionally pre-coated substrate,
2) applying a coating material composition different from the composition applied in step 1) to the first coating film present on the substrate obtained after step 1) and forming a second coating film, which is preferably adjacent to the first coating film, wherein said coating material composition is preferably a clearcoat material composition, and
3) jointly curing at least the first and second coating films applied in steps 1) and 2) to obtain a multilayer coating system comprising at least the first and the second coating layers L1 and L2,
wherein the first coating layer L1 is formed from the coating material composition according to one or more of claims 1 to 9.
